# EUROPÄISCHE PATENTSCHRIFT

(11) **EP 1 191 305 B1**
(45) Veröffentlichungstag und Bekanntmachung des Hinweises auf die Patenterteilung: **10.04.2002**
(21) Anmeldenummer: 00117871.4
(22) Anmeldetag: 19.08.2000
(51) Int. Cl.: G01B 7/06, B29C 47/92

(54) **Foliendickenmessung mit Anpresskraftmessung**
Measurement of foil thickness with measurement of contact force
Mesure d'épaisseur de feuille avec mesure de force de pression

(43) Veröffentlichungstag der Anmeldung: 27.03.2002
(73) Patentinhaber: Plast-Control Gerätebau GmbH, 42899 Remscheid (DE)
(72) Erfinder: Stein, Markus, 58285 Gevelsberg (DE)
(74) Vertreter: TER MEER STEINMEISTER & PARTNER GbR

(56) Entgegenhaltungen:
- DE-A- 4 009 982
- DE-A- 19 511 939
- DE-A- 19 632 385
- US-A- 5 101 166
- US-A- 5 223 797

## Beschreibung

Die Erfindung betrifft ein Vorrichtung und ein Verfahren zur Messung von Foliendicken mit Hilfe eines Meßkopfes, der mit einem Halter so gegen die Folie gehalten wird, daß er diese auslenkt.

Solche Verfahren werden insbesondere bei der Herstellung von Kunststoffolien eingesetzt, damit die Foliendicke und gegebenenfalls die Gleichmäßigkeit der Foliendicke auf der Breite der Folie während des Herstellungsprozesses überwacht und erforderlichenfalls geregelt werden kann. Beispielsweise ist bei einer Blasfolienanlage der Meßkopf so an der durch Innenblasluft aufgeblasenen und nach oben abgezogenen Folienblase angeordnet, daß er um die Folienblase umlaufen und so während eines Umlaufs die Foliendicke auf dem gesamten Umfang der Folienblase messen kann. Da es insbesondere bei Blasfolien schwierig wäre, Komponenten des Meßkopfes auf beiden Seiten der Folie anzuordnen, sollte der Meßkopf so gestaltet sein, daß die Messung von einer Seite der Folie aus erfolgen kann. Dies läßt sich mit unterschiedlichen Meßprinzipien realisieren, beispielsweise mit kapazitiven Meßverfahren. Bei leitfähigen Folien kommen jedoch auch induktive Verfahren in Betracht, und bei transparenten Folien auch optische Verfahren.

Es sind kapazitive Verfahren bekannt, bei denen der Sensor unmittelbar mit der Oberfläche der Folie in Berührung steht. In US-A-5 223 797 wird ein kapazitiver Meßkopf beschrieben, der die Form einer drehbaren Trommel hat und an der Folienoberfläche abrollt. Wenn sich, wie es in der Regel der Fall ist, die Folie relativ zum Sensor bewegt, hat dies den Vorteil, daß eine Beschädigung der Folienoberfläche durch direkte Berührung mit dem Sensor vermieden oder zumindest gemindert wird. In jedem Fall sollte die Folie auf einer gewissen Länge satt an der Oberfläche des Meßkopfes anliegen, damit eine präzise und fehlerfreie Dickenmessung ermöglicht wird. Aus diesem Grund wird der Meßkopf leicht gegen die Folie angedrückt, so daß die Folie an der Stelle des Meßkopfes etwas ausgelenkt wird. Bei Messungen an einer Folienblase sorgt der Innendruck in der Blase dafür, daß sich die Folie an den Sensor anschmiegt. Bei Messungen an flachen Folienbahnen führt die Auslenkung der Folie dazu, daß die Folie satt an der Meßkopfoberfläche anliegt oder, wenn der Meßkopf trommelförmig ausgebildet ist, die Trommeloberfläche auf einer bestimmten Umfangslänge umschlingt.

Es sind auch Meßköpfe bekannt, die nicht direkt mit der Folie in Berührung stehen, sondern bei denen zwischen der Folie und dem Meßkopf ein Luftpolster erzeugt wird, so daß der Meßkopf in definiertem Abstand über der Folienoberfläche schwebt. Auch in diesem Fall sollte jedoch die Folie etwas ausgelenkt werden, damit der definierte Abstand zwischen Meßkopfoberfläche und Folie auf einer gewissen Länge aufrecht erhalten bleibt.

Da bei Folienblasen der Innendruck der Blase und bei flachen Folienbahnen die Zugspannung der Folienbahn gewissen Schwankungen unterliegt, ist es erforderlich, das Ausmaß der Auslenkung, also die Eintauchtiefe des Meßkopfes in die Folie, zu regeln. Hierzu ist es bekannt, den Abstand zwischen dem Meßkopf und der Folienoberfläche mit einer versetzt zu dem Meßkopf angeordneten Meßeinrichtung zu messen. Da dieser Abstand in Abhängigkeit von der Eintauchtiefe des Meßkopfes variiert, ist es möglich, die Eintauchtiefe indirekt zu bestimmen und zu regeln. Bei einem bekannten Verfahren erfolgt die Abstandsmessung mit Hilfe einer am Meßkopf gehaltenen Abtastklappe, die an der Folienoberfläche entlang streicht. Dabei besteht jedoch der Nachteil, daß es aufgrund der Reibung zwischen der Folie und der Abtastklappe wieder zu einer Beschädigung der Folienoberfläche kommen kann. Bei einem anderen Verfahren erfolgt die Abstandsmessung mittels Ultraschall. Dieses Meßverfahren ist jedoch aufwendig und relativ ungenau, da die Folie nur ein verhältnismäßig schwaches Echo erzeugt. Bei beiden Verfahren besteht der Nachteil, daß die Abstandsmessung an einer gegenüber der eigentlichen Berührungsstelle zwischen Folienoberfläche und Folie versetzten Position erfolgt, so daß Unterschiede in der Verformungsgeometrie der Folie zu Ungenauigkeiten führen können.

Aufgabe der Erfindung ist es, ein Verfahren und eine Vorrichtung zu schaffen, bei denen durch eine präzisere Regelung der Auslenkung der Folie eine genaue und fehlerfreie Dickenmessung ermöglicht wird.

Diese Aufgabe wird bei einem Verfahren der eingangs genannten Art dadurch gelöst, daß die von der Folie auf den Meßkopf ausgeübte Reaktionskraft gemessen und durch Bewegen des Meßkopfes auf einen vorgegebenen Sollwert geregelt wird.

Erfindungsgemäß erfolgt somit anstelle der herkömmlichen Abstandsmessung eine Kraftmessung. Die von der Folie auf den Meßkopf ausgeübte Reaktionskraft ist von der Eintauchtiefe abhängig und ermöglicht es somit, diese Eintauchtiefe auf einen konstanten Wert zu regeln. Der Vorteil besteht darin, daß die Kraftmessung unmittelbar mit Hilfe des Meßkopf an derselben Stelle erfolgt, an der auch die eigentliche Dickenmessung stattfindet. So wird eine Verfälschung des Meßergebnisses vermieden.

Geeignete Kraftsensoren sind für eine große Bandbreite von Kraftbereichen im Handel erhältlich, so daß die Kraftmessung kostengünstig und verläßlich mit Standardkomponenten ausgeführt werden kann, Gegenüber einer herkömmlichen Ultraschall-Abstandsmessung wird so bei unverminderter oder sogar noch gesteigerter Meßgenauigkeit eine Verringerung des apparativen Aufwands erreicht. Gegenüber der Verwendung von Abtastklappen besteht ein wesentlicher Vorteil darin, daß für die Abstandsmessung keine zusätzliche Berührungsstelle zwischen Meßkopf und Folie erforderlich ist. Bei Verwendung eines Meßkopfes in der Form einer drehbaren Trommel oder eines Meßkopfes, der auf einem Luftpolster schwebt, kann somit bei empfindlichen Folien eine Schädigung der Folienoberfläche vermieden werden.

Vorteilhafte Ausgestaltungen der Erfindung ergeben sich aus den Unteransprüchen.

Bevorzugt ist der Kraftsensor zur Messung der Reaktionskraft zwischen dem Meßkopf und dem zugehörigen Halter angeordnet, der mit Hilfe eines Antriebs, beispielsweise mit Hilfe eines Schrittmotors, in der Richtung rechtwinklig zur Folie bewegbar ist. Die vom Kraftsensor gemessene Reaktionskraft wird mit einem zuvor eingestellten Sollwert verglichen, und anhand eines Soll/Ist-Vergleichs wird die Position des Halters mit Hilfe des Antriebs geregelt.

Der Sollwert für die Reaktionskraft ist so zu wählen, daß er der gewünschten Eintauchtiefe des Meßkopfes in die Folie entspricht. Hierzu eignet sich das folgende Verfahren: Der Meßkopf wird zunächst so weit an die Folie herangefahren, daß er (beziehungsweise sein Luftpolster) die Folie gerade eben berührt, ohne diese auszulenken. Auch dieser Punkt kann mit Hilfe des Kraftsensors erfaßt werden. Anschließend wird der Halter um eine definierte, der gewünschten Eintauchtiefe entsprechende Wegstrecke weiter ausgefahren. Mit Hilfe eines Schrittmotors als Antrieb läßt sich diese Wegstrecke präzise einstellen, ohne daß eine zusätzliche Wegmeßeinrichtung benötigt wird. Wenn der Meßkopf seine endgültige Position erreicht hat, wird die dann von der ausgelenkten Folie auf den Meßkopf ausgeübte Reaktionskraft gemessen und als Sollwert gespeichert. Durch Regelung auf diesen Sollwert kann dann die ursprünglich eingestellte Eintauchtiefe konstant gehalten werden. Bevor der Meßkopf an der Folie anliegt, kann der Kraftsensor durch eine Nullmessung kalibriert werden.

Im folgenden werden Ausführungsbeispiele der Erfindung anhand der Zeichnungen näher erläutert.

Es zeigen:
- Fig. 1: eine schematische Darstellung eines Meßkopfes an einer Folienblase in der Draufsicht;
- Fig. 2: den Meßkopf nach Fig. 1 im Zustand vor Beginn der Messung; und
- Fig. 3: den Meßkopf in einem Zwischenstadium bei der Vorbereitung der Messung.

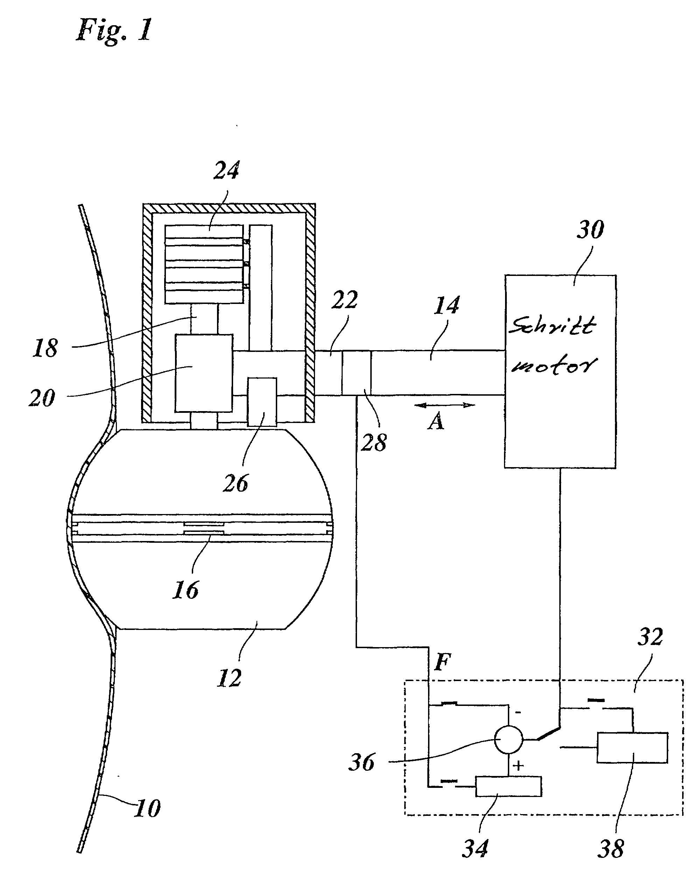

In Fig. 1 ist in einem horizontalen Schnitt ein Teil einer schlauchförmigen Folie 10 gezeigt, die aus einem Extrusionswerkzeug extrudiert, durch Innenluft zu einer Folienblase aufgeblasen und in der Richtung senkrecht zur Zeichenebene in Fig, 1 abgezogen wird. Zur Messung der Dicke der Folie 10 ist ein Meßkopf 12 vorgesehen, der die Form einer drehbaren Trommel hat, die mit ihrer leicht balligen Umfangsfläche an der Außenfläche der Folie 10 abrollt. Während der Messung wird der Meßkopf 12 durch einen Halter 14 in einer Position gehalten, in der er etwas in die Folienblase eindrückt. Der Innendruck der Folienblase sorgt dann dafür, daß sich die Folie 10 an die Umfangsfläche des Meßkopfes 12 anschmiegt, so daß auf einer gewissen Umfangslänge des Meßkopfes eine satte Anlage der Folie 10 am Meßkopf gewährleistet ist.

Der Meßkopf 12 weist in seiner Mittelebene mehrere gleichmäßig auf dem Umfang verteilte Meßkondensatoren 16 auf. Wenn der Meßkopf an der Folie 10 abrollt, gelangen die Meßkondensatoren 16 nacheinander in den Bereich, in dem die Folie 10 am Meßkopf anliegt. Innerhalb einer bestimmten Zeitspanne liegt daher die Folie auf der gesamten Umfangslänge des Meßkondensators 16 unmittelbar an dessen Kondensatorplatten an, so daß die Kapazität des Meßkondensators durch das dielektrische Folienmaterial beeinflußt wird. Innerhalb dieser Zeitspanne ist daher eine präzise kapazitive Dickenmessung möglich. Das Grundprinzip der kapazitiven Dickenmessung ist bekannt und soll deshalb hiernicht näher erläutert werden. Es wird jedoch auf die parallele europäische Patentanmeldung der Anmelderin mit dem Titel "Sensor zur kapazitiven Messung von Foliendicken" hingewiesen, in der eine besonders vorteilhafte Meßanordnung beschrieben wird.

Der Meßkopf 12 ist auf einer Welle 18 befestigt, die mit Hilfe eines Lagers 20 drehbar am Ende eines Tragarms 22 gehalten ist. Das Meßsignal wird über Schleifringkontakte 24 an eine nicht gezeigte Auswerteschaltung weitergeleitet. An dem Tragarm 22 ist außerdem ein Winkelinkrementgeber 26 angeordnet, mit dem sich die Winkelstellung des Meßkopfes 12 erfassen läßt.

Der Tragarm 22 ist über einen Kraftsensor 28 mit dem Halter 14 verbunden. Bei dem Kraftsensor 28 kann es sich um irgendeinen handelsüblichen Kraftsensor handeln, der beispielsweise eine Anordnung von Dehnungsmeßstreifen aufweist. Mit Hilfe dieses Kraftsensors 28 wird die Reaktionskraft gemessen, die die Folie 10 auf den Meßkopf 12 ausübt und die über den Tragarm 22 auf den Halter 14 übertragen wird. Gemessen werden kann die Axialkraft in Richtung des Doppelpfeils A in Fig. 1. Da jedoch im gezeigten Beispiel der trommelförmige Meßkopf 12 gegenüber der Achse des Halters 14 versetzt angeordnet ist, kann mit Hilfe des Kraftsensors 28 wahlweise oder zusätzlich auch das von der Folie auf den Meßkopf 12 und den Tragarm 22 ausgeübte Drehmoment gemessen werden, um eine höhere Empfindlichkeit zu erreichen.

Als Beispiel kann angenommen werden, daß der Kraftsensor 28 für eine Axialkraftmessung im Meßbereich von 0 bis 200 N ausgelegt ist. Ein in den Kraftsensor integrierter Analog/Digital-Wandler wandelt die gemessene Kraft in ein 17-bit Signal um. Dies entspricht einer Auflösung von etwa 1,5 mN. Der Meßbereich des Kraftsensors 28 ist so groß gewählt, daß einerseits die während des praktischen Einsatzes zu erwartenden mechanischen Belastungen nicht zu einer Zerstörung des Kraftsensors führen, andererseits jedoch die Reaktionskraft der Folie 10, die in der Praxis typischerweise in der Größenordnung von 0,2 bis 0,3 N liegt, mit hinreichender Genauigkeit gemessen werden kann.

Der Halter 14 ist mit Hilfe eines Schrittmotors 30 in Richtung des Doppelpfeiles A ein- und ausfahrbar. Der Schrittmotor 30 wird durch Impulse von einer Steuereinheit 32 so angesteuert, daß eine feinstufige Einstellung des Ausfahrweges des Halters 14 ermöglicht wird.

Die Steuereinheit 32 wird in der Praxis durch einen Digitalrechner gebildet. Ihre Funktionsweise wird in der Zeichnung durch ein Ersatzschaltbild illustriert.

In dem in Fig. 1 gezeigten Zustand, während der Dickenmessung, wird die Position des Meßkopfes 12 mit Hilfe des Schrittmotors 30 fortlaufend so variiert, daß die vom Kraftsensor 28 gemessene Reaktionskraft auf einen Sollwert eingeregelt wird, der in der Steuereinheit 32 in einem Register 34 abgelegt ist. Zu diesem Zweck wird der im Register 34 gespeicherte Wert durch ein Differenzglied 36 mit der vom Kraftsensor 28 gemessenen Kraft F verglichen und der Schrittmotor 30 wird entsprechend der Soll/Ist-Differenz angesteuert. Somit wird die von der Folie 10 auf den Meßkopf 12 ausgeübte Reaktionskraft - und damit auch die Eintauchtiefe des Meßkopfes 12 in die Folienblase - stets innerhalb zulässiger Toleranzgrenzen auf dem zuvor eingestellten Wert gehalten wird. So ist sichergestellt, daß auch Schwankungen des Innendruckes der Folienblase nicht zu einer Ablösung der Folie 10 von den Meßkondensatoren 16 führen und so eine Verfälschung der Dickenmessung bewirken.

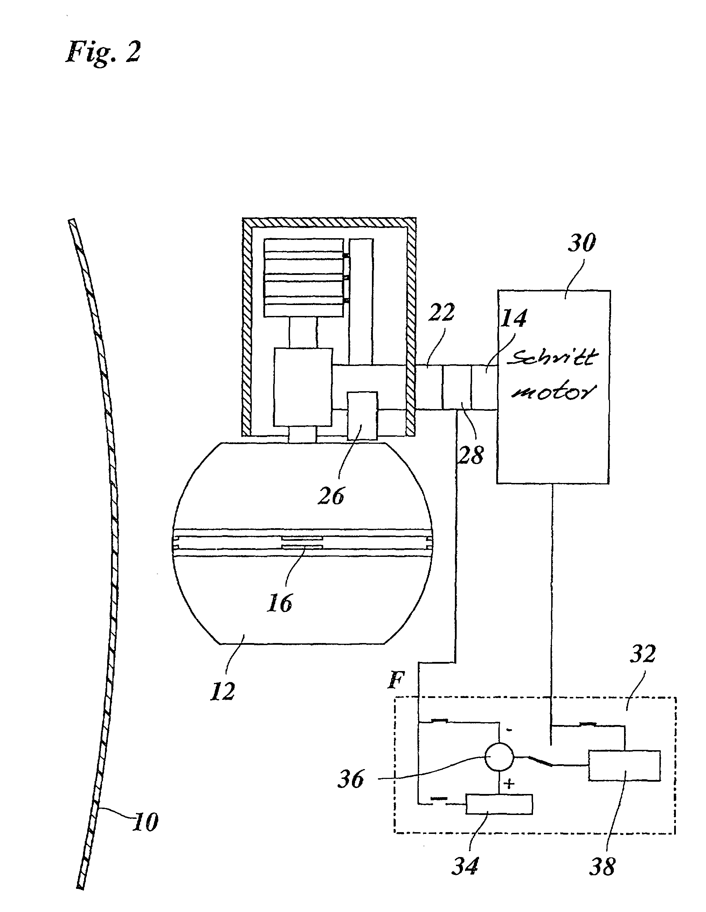

Fig. 2 illustriert den Zustand vor Beginn der Dickenmessung. In diesem Zustand ist der Schrittmotor 30 vom Differenzglied 36 getrennt und stattdessen mit einem Weggeber 38 verbunden. Unter der Steuerung dieses Weggebers ist der Halter 14 so weit zurückgefahren worden, daß der Meßkopf 12 einen deutlichen Abstand zur Folie 10 aufweist. Somit übt die Folie 10 keinerlei Reaktionskraft auf den Meßkopf 12 aus, und das in diesem Fall vom Kraftsensor 28 an die Steuereinheit 32 gelieferte Signal entspricht dem kraftfreien Zustand. Dieses Signal wird als Nullsignal im Register 34 gespeichert.

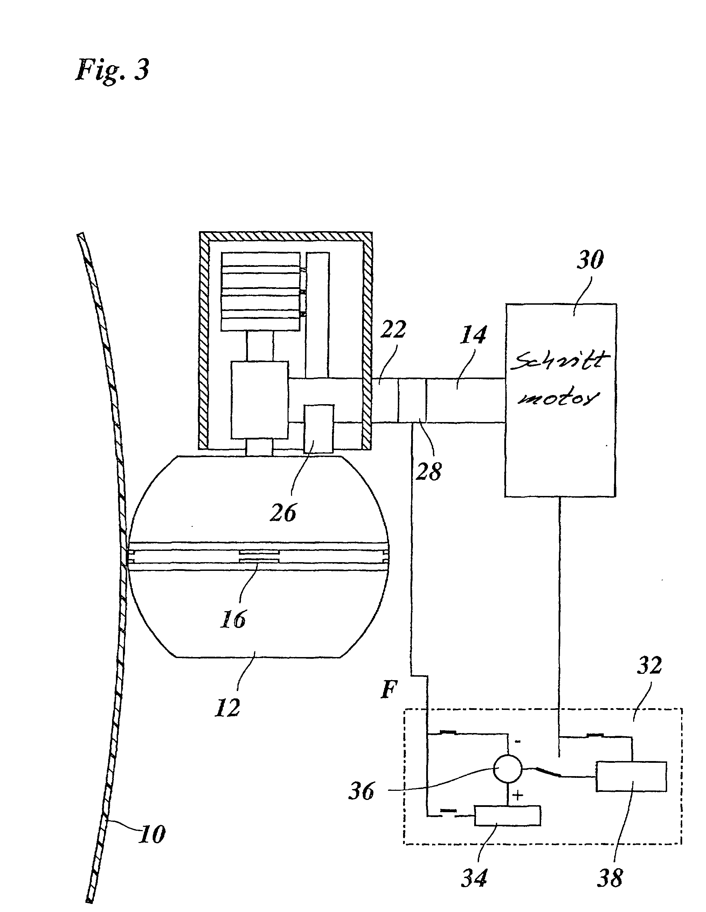

Anschließend wird das Register 34 wieder vom Kraftsensor 28 getrennt, und mit Hilfe des Weggebers 38 wird der Halter 14 langsam in Richtung auf die Folie 10 ausgefahren. Dabei wird das Signal des Kraftsensors 28 vom Differenzglied 36 überwacht. Sobald der in Fig. 3 gezeigte Zustand erreicht ist, in dem der Meßkopf 12 gerade eben die Folie 10 berührt, liefert der Kraftsensor 28 ein Signal, daß von dein im Register 34 gespeicherten Nullsignal abweicht. Dies veranlaßt den Weggeber 38, die in diesem Augenblick erreichte Position des Meßkopfes als Referenzposition zu erfassen. Ausgehend von dieser Referenzposition wird dann der Halter 14 um eine vorbestimmte Wegstrecke ausgefahren. Diese vorbestimmte Wegstrecke entspricht der gewünschten Eintauchtiefe des Meßkopfes 12 in die Folie 10 und wird in Abhängigkeit von der Geometrie des Meßkopfes und den physikalischen Eigenschaften der Folie 10 gewählt.

Wenn der Meßkopf 12 seine Zielposition (Fig. 1) erreicht, wird das Register 34 kurzzeitig wieder mit dem Kraftsensor 28 verbunden, um den in diesem Augenblick vom Kraftsensor gelieferten Wert als Sollwert zu speichern. (Das zuvor gespeicherte Nullsignal kann dabei ein einem separaten Teil des Registers 34 gespeichert bleiben.) Dann wird das Differenzglied 36 wieder mit dem Schrittmotor 30 verbunden, und die Position des Meßkopfes 12 wird in der bereits beschriebenen Weise geregelt.

Zur Erfassung des in Fig. 3 gezeigten Zustands, in dem der Meßkopf 12 erstmals die Folie 10 berührt, kann wahlweise auch das Signal des Winkelinkrementgebers 26 verwendet werden, da der Meßkopf 12 durch die Folie 10 in Drehung versetzt wird, sobald er diese berührt.

## Patentansprüche

1. Verfahren zur Messung von Foliendicken mit Hilfe eines Meßkopfes (12), der mit einem Halter (14) so gegen die Folie (10) gehalten wird, daß er diese auslenkt, **dadurch gekennzeichnet, daß** die von der Folie (10) auf den Meßkopf (12) ausgeübte Reaktionskraft (F) gemessen und durch Bewegen des Meßkopfes auf einen vorgegebenen Sollwert geregelt wird.

2. Verfahren nach Anspruch 1, bei dem der Meßkopf (12) vor Beginn der Messung in eine Position gebracht wird, in der er die Folie (10) so auslenkt, daß diese mit einer hinreichend großen Fläche am Meßkopf anliegt, und der in dieser Position des Meßkopfes gemessene Wert der Reaktionskraft als Sollwert gespeichert wird.

3. Verfahren nach Anspruch 2, bei dem der Meßkopf (12) vor Beginn der Messung in eine Referenzposition gebracht wird, in der an der Folie (10) anliegt, ohne diese wesentlich auszulenken, und der Meßkopf (12) dann ausgehend von dieser Referenzposition um eine vorgegebene Wegstrecke in die endgültige Position bewegt wird.

4. Verfahren nach Anspruch 3, bei dem das Erreichen der Referenzposition durch Messung der Reaktionskraft erfaßt wird.

5. Vorrichtung zur Messung von Foliendicken, mit einem Meßkopf (12), der an einem Halter (14) gehalten ist, einem Antrieb (30) zum Bewegen des Halters relativ zur Folie (10) und einer Meßeinrichtung (28) zur Messung des Ausmaßes, in dem die Folie (10) durch den Meßkopf ausgelenkt wird, **dadurch gekennzeichnet, daß** die Meßeinrichtung durch einen Kraftsensor (28) gebildet wird, der als Maß für die Auslenkung der Folie (10) die vom Meßkopf (12) auf den Halter (14) übertragene Reaktionskraft (F) der Folie (10) mißt.

6. Vorrichtung nach Anspruch 5, mit einer Steuereinheit (32), die das Signal des Kraftsensors (28) aufnimmt und auf den Antrieb (30) einwirkt, um die Reaktionskraft (F) auf einen vorgegebenen Sollwert zu regeln.

7. Vorrichtung nach Anspruch 6, bei der die Steuereinheit (32) einen Speicher (34) aufweist, der zur Speicherung eines Sollwertes für die Reaktionskraft mit dem Kraftsensor (28) verbindbar ist.

8. Vorrichtung nach Anspruch 6 oder 7, bei der die Steuereinheit (32) einen Weggeber (38) zur Speicherung einer Referenzposition für den Meßkopf (12) und zur Einstellung des Meßkopfes (12) auf eine in bezug auf diese Referenzposition vorgegebene Position aufweist.

9. Vorrichtung nach einem der Ansprüche 5 bis 8, bei der der Antrieb (30) ein Schrittmotor ist.

10. Vorrichtung nach einem der Ansprüche 5 bis 9, bei der der Meßkopf (12) ein kapazitiver Meßkopf ist.

## Claims

1. Method for measuring film thicknesses by means of a measuring head (12) which is held against the film (10) by means of a holder (14) so that it deflects the film (10), **characterised in that** the reaction force (F) which is exerted by the film (10) on the measuring head (12) is measured and altered to a predetermined desired value by movement of the measuring head.

2. Method according to claim 1, wherein the measuring head (12) is moved, before the start of the measurement, into a position in which it deflects the film (10) so that the film (10) presses, with a sufficiently large surface, against the measuring head and the value of the reaction force is stored as the desired value, which value is measured at this position of the measuring head.

3. Method according to claim 2, wherein the measuring head (12) is moved, before the start of the measurement, into a reference position in which it presses against the film (10) without substantially deflecting the film (10), and the measuring head (12) is then moved by a predetermined distance to the final position starting from that reference position.

4. Method according to claim 3, wherein reaching the reference position is detected by measuring the reaction force.

5. Apparatus for measuring film thicknesses, having a measuring head (12) which is held on a holder (14), and having a drive (30) for moving the holder relative to the film (10) and having a measuring device (28) for measuring the extent by which the film (10) is deflected by the measuring head, **characterised in that** the measuring device is formed by a force sensor (28) which measures the reaction force (F) of the film (10), which is transmitted from the measuring head (12) to the holder (14), as the measurement for the deflection of the film (10).

6. Apparatus according to claim 5, having a control unit (32) which receives the signal of the force sensor (28) and acts on the drive (30) in order to alter the reaction force (F) to a predetermined desired value.

7. Apparatus according to claim 6, wherein the control unit (32) has a store (34) which can be connected to the force sensor (28) in order to store a desired value for the reaction force.

8. Apparatus according to claim 6 or claim 7, wherein the control unit (32) has a displacement sensor (38) for storing a reference position for the measuring head (12) and for adjusting the measuring head (12) to a position which is predetermined relative to the reference position.

9. Apparatus according to any one of claims 5 to 8, wherein the drive (30) is a stepping motor.

10. Apparatus according to any one of claims 5 to 9, wherein the measuring head (12) is a capacitive measuring head.

## Revendications

1. Procédé de mesure d'épaisseurs de feuilles à l'aide d'une tête de mesure (12) qui est maintenue contre la feuille (10) par un dispositif de maintien (14), de manière à dévier celle-ci, **caractérisé en ce que** la force de réaction (F), exercée par la feuille (10) sur la tête de mesure (12), est mesurée et réglée par déplacement de la tête de mesure sur une valeur de consigne prédéterminée.

2. Procédé selon la revendication 1, dans lequel la tête de mesure (12) est amenée, avant le début de la mesure, dans une position dans laquelle elle dévie la feuille (10) de manière que celle-ci s'applique contre la tête de mesure, avec une surface suffisamment grande, et la valeur de la force de réaction, mesurée dans cette position de la tête de mesure, est mémorisée en tant que valeur de consigne.

3. Procédé selon la revendication 2, dans lequel la tête de mesure (12) est amenée, avant le début de la mesure, dans une position de référence dans laquelle elle s'applique contre la feuille (10), sans dévier sensiblement celle-ci, et la tête de mesure (12), partant de cette position de référence, est déplacée d'une distance donnée dans la position définitive.

4. Procédé selon la revendication 3, dans lequel la position de référence atteinte est détectée par mesure de la force de réaction.

5. Dispositif de mesure d'épaisseurs de feuilles comportant une tête de mesure (12) qui est maintenue sur un dispositif de maintien (14), comportant un dispositif d'entraînement (30) pour le déplacement du dispositif de maintien par rapport à la feuille (10) ainsi qu'un dispositif de mesure (28) pour la mesure de la grandeur de déviation de la feuille (10) sous l'effet de la tête de mesure, **caractérisé en ce que** le dispositif de mesure est constitué par un capteur de force (28) qui mesure, en tant que grandeur de déviation de la feuille (10), la force de réaction (F) de la feuille (10), transmise par la tête de mesure (12) au dispositif de maintien (14).

6. Dispositif selon la revendication 5, comportant une unité de commande (32) qui reçoit le signal du capteur de force (28) et agit sur le dispositif d'entraînement (30), pour régler la force de réaction (F) sur une valeur de consigne prédéterminée.

7. Dispositif selon la revendication 6, dans lequel l'unité de commande (32) comporte une mémoire (34) qui peut être reliée au capteur de force (28), pour mémoriser une valeur de consigne de la force de réaction.

8. Dispositif selon la revendication 6 ou 7, dans lequel l'unité de commande 32 comporte un capteur de distance (38) pour mémoriser une position de référence de la tête de mesure (12) et pour régler la tête de mesure (12) sur une position prédéterminée par rapport à cette position de référence.

9. Dispositif selon l'une des revendications 5 à 8, dans lequel le dispositif d'entraînement (30) est un moteur pas à pas.

10. Dispositif selon l'une des revendications 5 à 9, dans lequel la tête de mesure (12) est une tête de mesure capacitive.
